Europäisches Patentamt

European Patent Office

Office européen des brevets

(19)

(11) Publication number: **0 119 948**
A2

# EUROPEAN PATENT APPLICATION

(21) Application number: 84630046.5

(22) Date of filing: 06.03.84

(51) Int. Cl.³: **B 29 H 9/02**

(30) Priority: **17.03.83 US 476010**

(43) Date of publication of application: **26.09.84**
**Bulletin 84/39**

(84) Designated Contracting States: **DE FR GB IT LU NL**

(71) Applicant: **THE GOODYEAR TIRE & RUBBER COMPANY, 1144 East Market Street, Akron, Ohio 44316 (US)**

(72) Inventor: **Kim, Soojaa Lee, 4194 Big Spruse Drive, Akron Ohio 44313 (US)**
Inventor: **Ludwick, Charles Edgar, 421 Sheri Avenue Northeast, Massillon Ohio 44646 (US)**

(74) Representative: **Weyland, Joseph Jean Pierre, Goodyear International Tire Technical Center Patent Department Avenue Gordon Smith, L-7750 Colmar-Berg (LU)**

(54) Treated yarn, method of preparation and rubber/cord composite.

(57) A composite of drawn polyester yarn having a coating thereon comprised of (A) a specified fiber treatment oil and (B) an epoxy resin containing a specified dioxaborinane. A composite of rubber/cord is also provided where the cord is the required polyester/coating composite as well as a method for preparing said polyester/coating composite.

EP 0 119 948 A2

TITLE: TREATED YARN, METHOD OF PREPARATION
AND RUBBER/CORD COMPOSITE

Field of Invention

This invention relates to adhering polyester yarn and/or cord of multiple yarns thereof to rubber. The invention further relates to a composite of rubber and a polyester cord reinforcement therefor.

Background of the Invention

Composites of fiber-reinforced rubber are useful for many purposes including pneumatic tires and industrial belts. Typically, such reinforcing fibers are in the form of a cord comprised of cabled and twisted yarn. Among such fibers are various materials including nylon, polyester, steel wire, rayon, cotton and glass of which, perhaps polyester is one of the most widely used fibers.

An important requirement of such reinforced rubber composite is the adhesion of the reinforcing fiber or cord to the rubber itself. Such adhesion is of particular importance where the resulting composite is a load-bearing component and is subjected to considerable flexing and distortion, such as contortions encountered in the typical operation and use of pneumatic tires and industrial belts.

Various methods have been proposed and used to obtain adhesion of fiber or cord to rubber. For example, the cord has been pre-treated prior to adhering to rubber by dipping, followed by drying, in an aqueous emulsion comprised of a resorcinol/formaldehyde latex (RFL), a latex treatment well-known to those having skill in the art, in which the resorcinol/formaldehyde resin is a part of an aqueous latex, usually a butadiene/styrene/vinylpyridine terpolymer. The resorcinol/formaldehyde resin is understood to be a primary element of the adhesive between the cord and the rubber with the latex being an important factor in somewhat reducing the modulus of the adhesive layer. Other advantages and features of the RFL for adhering cord to rubber are generally well-known to those having skill in the art.

U. S. Patent 4,356,219 relates to preparing a drawn, coated polyester yarn by applying an aqueous emulsion of epoxy resin and spin finish fiber treatment oil to spun or drawn yarn where the oil is composed of a mixture pentaerythriltol tetraester $(C_{12}-C_{14})$ fatty acid, polyoxyethylene nonyl phenol and oleyl diethyl imidazolinium sulfate. Such preparation yields a coated polyester yarn having an enhanced ability for bonding to rubber compounds.

However, it is still desired to provide advantageous methods of bonding polyester yarn and/or cords thereof to rubber compounds in terms of stability of yarn finish and/or compatability with conventional yarn spinning lubricants and easier handling of the finish (eg longer shelf life - less frequent preparation) and to provide the resulting composite.

Disclosure and Practice of the Invention

It has been discovered that adhesion between a polyester yarn or cord thereof to rubber can be enhanced by application of a composition to the yarn or cord prior to adhering to the rubber. It is intended that the composition can be applied to spun yarn before drawing of the yarn or to drawn yarn. Preferably, it is applied to spun yarn.

In accordance with this invention, a drawn yarn composite comprises a polyester yarn, optionally in the form of a multiple of twisted or cabled drawn yarns to form a cord thereof, and a coating thereon, comprised of, based on the yarn, (A) about 0.5 to about 1.5 weight percent of a spin-finish fiber treatment oil comprised of a mixture of (1) pentaerythritol tetraester ($C_{12}$-$C_{14}$) fatty acid, (2) polyoxyethylene nonyl phenol, (3) decaglyceroltetraoleate, (4) ethoxylated castor oil and (5) oleyl diethyl imidazolinium sulfate and (B) about 0.1 to about 2.0 weight percent epoxy resin having a melting point below about 75°C. and containing about 9 to about 3, preferably about 8 to about 4, weight percent 2-($\beta$-dimethylaminoethoxy)-4-methyl-1,3,2-dioxaborinane based on said epoxy resin.

The ratio of epoxy to spin-finish oil is important and a weight ratio thereof is desired to be in the range of about 1/15 to about 5/1 in order to maintain processability and to obtain adequate adhesion and effective dynamic properties of the cord as a rubber reinforcement member. The total amount of the epoxy and the spin-finish oil together ranges from about 0.7 to about 2.8 weight percent based upon the yarn or cord itself. It is important to appreciate that both the total amount of finish and the weight ratio of the epoxy to spin-finish oil is critical for both adhesion and processability of the yarn.

The polyester yarn composite is prepared by application of coating to spun or drawn polyester yarn, preferably to spun yarn prior to drawing followed by drawing the yarn, with an aqueous emulsion of an epoxy resin and spin finish fiber treatment oil. The epoxy resin is to be applied simultaneously with, before or after the treatment oil, preferably with the treatment oil. The adhesive system requires the presence of the spin-finish oil for effective polyester fiber processing and performance in the composite.

Thus, the invention is directed to (A) the yarn composite, (B) twisted and cabled yarn composites in the form of a cord and (C) a rubber composite comprised of rubber reinforced with the cord (B).

Spun yarn prior to drawing is preferably coated as a single strand on a continuous basis, with the aqueous emulsion(s) of the epoxy and spin-finish oil. For example, the epoxy and spin-finish oil can be applied to the yarn as a single, mixed emulsion. Alternately, it is believed that sequential applications of the epoxy emulsion and spin-finish emulsion can be applied to the yarn in either order but close enough together to be essentially or practically a simultaneous application. Thus, it is desired to present a mixed emulsion of epoxy and oil to the yarn.

The treated spun yarn can be dried by heat generated in the subsequent drawing step.

Optionally, if desired, it is intended that drawn yarn (spun yarn after being drawn) be also similarly treated. The treated drawn yarn can then be dried by application of heat.

Application of the emulsion can be done by conventional methods such as finish roll application where the yarn is passed over and in contact with a rotating drum which has its lower portion immersed in the aqueous emulsion dip. The yarn might be coated by the aqueous emulsion which is carried on the surface of the rotating drum. Such drum itself may be rotating in the same direction as the yarn but at a somewhat slower speed.

Alternately, the emulsion can be metered directly onto the yarn.

In the drawing step, spun yarn is fed around (with several wraps) a top, heated, rotating roll, down past a heated platen and around (with several wraps) a bottom roll, which can optionally be heated, which is rotating faster than the top roll.

If the yarn has been treated by the method of this invention as a spun yarn, then because of somewhat increased frictional resistance or drag presented by the coating thereon, the drawing step conditions may have to be modified from relatively conventional drawing conditions, depending somewhat upon the amount of coating applied to the yarn. For example, it may be desired to reduce the temperature and rate, or speed of drawing. Indeed, it has been observed that the temperature of the top roll should be operated at about 95°C. to about 115°C., the platen at about 200°C. to about 220°C. and the bottom roll at about 90°C. to about 175°C. while the speed is adjusted to about 155 to about 315 meters/min.

Emulsions have been applied as a single, (or mixed), emulsion of epoxy and finish oil although it is contemplated that two individual emulsions might be applied as previously described. The yarn or cord can then be passed through an oven to dry it by removing the moisture. It is recognized that the drying treatment may cause some low level of epoxy reaction.

The cords prepared from such coated yarns are then dipped, preferably on a continuous basis, in a resorcinol-formaldehyde resin/latex-type (RFL) dip. Usually a single dip is sufficient for subsequent adhesive purposes when the yarn has been treated by the method of this invention, although it would have otherwise been expected that at least two dips of the cord would be necessary. The cord, after dipping, is dried by passing through an oven at about 230-270°F. (110 to 132°C.) to reduce the water content of the coating and then heated under tension in an oven at about 420-500°F. (216 to 260°C.) for about 60-180 seconds for further drying. Typically, the pre-drying, or first drying, temperature is about 250°F. (121°C) and the second oven temperature is about 460°F. (238°C.) with an overall drying residence time of the cord being about 70 seconds.

Various aqueous emulsions of epoxy are considered as being useful, representative of which are glycidyl ethers of phenol novalacs and glycidyl ethers of bisphenol-A, as well as other epoxys such as glycidyl ethers based on oligomers from bisphenol-A and eipchlorohydrin, diglycidyl ethers of catechol resorcinol, and hydroquinone and triglycidyl ethers of trimellitic and trimisic acid. An example of a commercial epoxy which can be used in this invention is a glycidyl ether of a phenol novalac, which can reportedly be obtained as Ciba Geigy EPN-1138.

Such an emulsion could be prepared by heating the epoxy to a temperature in the range of about 70°C. to about 130°C., then adding a small amount of 2-(ß-di-methylaminoethoxy)-4-methyl-1,3,2-dioxaborinane, reportedably obtainable from U.S. Borox as USB-110) in the amount of about 3 to about 9, preferably about 4 to about 8 weight percent based on the weight of epoxy, followed by vigorous stirring for 2-20 minutes. Then water is rapidly generally added to bring the aqueous emulsion to a solids content of about 10 to about 50 weight percent.

The spin-finish oil can be of various types, representative of which is a composite comprised of (a) pentaerythritol tetraester ($C_{12}$-$C_{14}$) fatty acid, (b) polyoxyethylene nonyl phenol, (c) decaglyceroltetraoleate, (d) ethoxylated castor oil, and (e) oleyl diethyl imidazolinium sulfate.

The aqueous emulsion adhesive system of this invention has a particular advantage of being directly applied to spun yarn and which acquires only a single application of a later RFL dip to the cord, although a double dip can be used if desired.

Although the mechanism is not completely understood, apparently the application of the aqueous emulsion system as a treatment to the spun yarn in some manner allows an interaction of the epoxy with the amorphous polyethylene terephthalate yarn which, in turn, provides an enhanced adhesion at a later time with the RFL adhesive application. The RFL adhesive is important for the ultimate, or eventual, rubber to cord adhesion.

The emulsion system, in addition, has an advantage of providing a relatively low volatility and low toxicity treatment which makes the use of such a system more convenient since its handling requirements are significantly reduced as compared to other conventional coating systems.

The practice of this invention is further illustrated by reference to the following examples which are intended to be representative rather than restrictive of the scope of the invention. Unless otherwise indicated, all parts and percentages are by weight.

## EXAMPLE I
### PREPARATION OF EPOXY EMULSION

An aqueous emulsion of an epoxy resin was prepared according to the recipe of Table 1:

### TABLE 1

| Material | Parts |
|---|---|
| Glycidyl ether of Bisphenol-A[1] | 400 |
| Catalyst and emulsifier[2] | 24 |
| De-Ionized Water | 600 |

[1]Obtained as Ciba-Beigy EPN-1138
[2]2-(β-dimethylaminoethoxy)-4-methyl-1,3,2-dioxborinane

The epoxy was heated to about 90°C. with stirring. To the heated epoxy was added the catalyst, rapidly, while still stirring. The mixture was vigorously stirred for three and one-half minutes and then the water was rapidly added. The resulting emulsion (40 percent solids) was stirred until the temperature dropped below 40°C. Then the stirring was discontinued and a relatively stable emulsion was observed.

## EXAMPLE II
### PREPARATION OF SINGLE MIXED EMULSION

Single emulsions of varying epoxy/oil ratios at total (epoxy + oil) 25% concentration were prepared using proper amounts of oil, water, and proper amounts of 40% epoxy emulsion from Example I. For example, a single emulsion of epoxy/oil ratio of 50/50 was prepared according to the following Table 2.

TABLE 2

| Material | Parts |
|---|---|
| Finish Oil[1] | 125 |
| Aqueous Emulsion of Epoxy[2] | 312 |
| De-Ionized Water | 300 |

[1] A fiber treatment oil comprised of a mixture of (1) pentaerythritol tetraester ($CH_{12}$-$C_{14}$) fatty acid, (2) polyoxyethylene nonyl phenol, (3) decaglyceroltetraoleate, (4) ethoxylated castor oil, and (5) oleyl diethyl imidazolinium sulfate.

[2] The aqueous emulsion from Example I.

The spin-finish oil and water were mixed at room temperature (about 25°C.) and stirred vigorously for about five minutes. To the mixture was then added the aqueous epoxy emulsion with high shear agitation for about five minutes.

EXAMPLE III

EMULSION STABILITY

The mixed single emulsions were prepared as shown in Example II and the shelf life was judged by visual observation of the time to separate as shown in Table 3. At all epoxy/oil ratios, the shelf life was observed to be improved significantly over those of the mixed emulsions with conventional finish oils (B-series). This allows less frequent interruption of operations for cleaning. A noticeably higher viscosity of series A might be one contributing factor to the improved stability.

## TABLE 3
### STABILITY OF SINGLE MIXED EMULSIONS FROM EPOXY AND FINISH OIL

| Epoxy/Oil Ratio | Oil[a] | Viscosity[b] Cps | Shelf Life |
|---|---|---|---|
| 0/100 | A | 8.7 | c |
| 25/75 | A | 5.9 | 2 weeks |
| 50/50 | A | 3.9 | 4 weeks |
| 0/100 | B | 4.4 | c |
| 25/75 | B | 3.7 | 0-1 day |
| 50/50 | B | 2.9 | 10 days |

a. "A" is oil used in this invention and "B" is conventional oil.

b. At room temperature 25°C.

c. No separation but milky appearance and viscosity decrease.

## EXAMPLE IV
### YARN AND CORD PREPARATION

A polyester (polyethyl terephthalate) of 1.04 intrinsic viscosity (IV) was extruded on a 2-inch Sterling extruder at a rate of 40 lbs. per hour and quenched with ambient temperature air to produce a spun yarn of 192 filaments. Subsequently, the epoxy and oil emulsion prepared according to Example I and II was applied to the yarn by either means of metering system or finish roll application modes. The aqueous emulsion-treated yarn was then taken up, or wound, on a bobbin. The yarn was subsequently unwound from the bobbin and drawn by stretching through or on a drawtwister at 6.19/1 draw ratio. Thus, the yarn is stretched about six times its original length. The top roll of the drawtwister was heated to 108°C. and wound with 4 wraps of yarn. The platen or hot plate, in the drawtwister was heated to 210°C. with the bottom roll being at about ambient temperature, or about 23°C., and would with five wraps of yarn. The delivery speed of the yarn was 155 m/min. The drawn yarn was then twisted, and then cabled, to produce a cord of 1500/2, 9/9 construction.

The 1500 represents the denier of the fiber bundle, the 2 represents the number of fiber bundles per cord and the 9/9 represents the residual twist (turns per inch; twist in yarns/twist in cable). To the spun yarn after quenching was added the epoxy finish and the finish oil as one emulsion prepared as described in Example II, by means of metering system comprised of gear pump attached to a ceramic jet. Emulsions used were 0/100, 25/75 and 50/50 epoxy/oil ratio at 25 percent total (epoxy + oil) content. The rest of yarn processing and cord processing conditions were as given in this Example IV.

The yarn and cord properties are listed in Table 4.

## TABLE 4

### PROPERTIES OF YARN AND CORD[a] FROM A METERING SYSTEM USING SINGLE MIXED EMULSION AT CONSTANT FOY[b]

| Epoxy/Oil Ratio | 0/100 | 25/75 | 50/50 |
|---|---|---|---|
| Yarn | | | |
| Denier | 1526 | 1546 | 1548 |
| Tensile strength, lb. | 31.5 | 31.3 | 30.0 |
| Tenacity, g/den. | 9.3 | 9.2 | 8.8 |
| Elongation, % | 10.5 | 3.5 | 9.6 |
| Greige Cord | | | |
| Denier | 3360 | 3334 | 3455 |
| Tensile strength, lb. | 54.4 | 51.2 | 52.4 |
| Tenacity, g/den | 7.35 | 6.98 | 6.89 |
| Elongation, (%) | 13.1 | 12.1 | 12.7 |
| Strength retention, (%) | | | |
| RFL Dipped | 91 | 90 | 87 |
| Heat Aged[c] | 95 | 82 | 75 |
| Ammonolysis[d] | 78 | 66 | 65 |
| Peel Adhesion strength (lb/in.) | | | |
| at 25°C. | 25 | 120 | 116 |
| at 120°C. | 6 | 75 | 74 |

[a]·Cord = 1500/2 ply, 9/9 turns per inch twists.
[b]·Total FOY 1.3 percent
[c]·Three hours at 180°C.
[d]·Three hours at 150°C. and under dry ammonia atmosphere.

### EXAMPLE V

#### FINISH ROLL APPLICATION

The yarn and cord were prepared as in Example IV except that a series of emulsions were prepared at different (20/80, 30/70, 40/60) epoxy/oil ratio and applied with a finish roll. The roll speed was varied to achieve various FOY levels. The yarn and cord properties are listed in Table 5.

TABLE 5

PROPERTIES OF YARN AND CORD FROM FINISH ROLL
APPLICATION WITH VARYING EPOXY/OIL RATIOS

| | Epoxy/Oil Ratio | | |
| --- | --- | --- | --- |
| | 20/80 | 30/70 | 40/60 |
| Total FOY | 1.9 | 1.1 | 1.2 |
| Yarn | | | |
| Denier | 1542 | 1557 | 1546 |
| Tensile Strength (lb.) | 31.3 | 30.0 | 30.5 |
| Tenacity, (g/den.) | 9.2 | 8.7 | 9.0 |
| Elongation, (%) | 9.0 | 9.2 | 9.2 |
| Greige Cord | | | |
| Denier | 3304 | 3303 | 3282 |
| Tensile strength, (lb.) | 52.2 | 52.0 | 50.6 |
| Tenacity, (g/den.) | 7.17 | 7.15 | 6.99 |
| Elongation, (%) | 11.7 | 11.8 | 11.5 |
| Strength Retention (%) | | | |
| RFL dipped | 95 | 93 | 92 |
| Heat Aged | 86 | 91 | 90 |
| Peel Adhesion Strength, (lb/in) | | | |
| at 25°C. | 104 | 112 | 97 |
| at 120°C. | 65 | 78 | 42 |

EXAMPLE VI

Yarn and cord were prepared as in Example V using a finish roll and emulsions of varying epoxy/oil ratios, namely, 25/75, 45/55, 50/50, 55/45. The FOY levels were varied by adjustment of finish roll speed.

The resulting yarn and cord properties are shown in the following Tables, 6, 7, 8 and 9, respectively.

Cords were submitted to adhesion tests (to rubber). In this Example, the treated yarns in the form of cords were first treated with an RFL aqueous dip, dried, adhered to vulcanized rubber and then adhesion-tested.

In this Example, an RFL dip composed of approximately 25 weight percent RF (resorcinol-formaldehyde) resin and 75 weight percent styrene/butadiene/vinyl pyridine terpolymer was prepared as a 20 percent solids aqueous dispersion and referred to as an emulsion. The RFL was applied to the cord of cabled yarns by dipping the cord into or through it on a continuous basis. The cord was then passed through a first oven at about 250°F. and then through a second oven at about 460°F. on a continuous basis after the dipping. The cord was then ready for adhesion testing.

The adhesion tests were conducted on samples prepared and tested by ASTM Method D2630-71 except that the sample preparation was somewhat modified in that samples were prepared by wrapping cord around a fabric building drum and forming a five layer sandwich construction of, in sequence, layer-by-layer, tape, cord, rubber, cord and tape laminate. The samples were built so that the cords were contiguous or in just a position next to and touching each other (30 ends per inch). Peel tests were carried out using an Instron at 2" per min. crosshead speed.

In this Example, tensile data was obtained on an Instron using 10" gauge and 12"/min. crosshead speed at room temperature.

## TABLE 6

PROPERTIES OF YARN AND CORDS FROM FINISH ROLL
APPLICATION WITH CONSTANT EPOXY/OIL
RATIO OF 25/75 BUT VARYING FOY

| | Total FOY (%) | | | | |
|---|---|---|---|---|---|
| | 0.7 | 1.0 | 1.3 | 1.7 | 2.5 |
| **Yarn Properties** | | | | | |
| Denier | 1521 | 1539 | 1522 | 1524 | 1529 |
| Tensile Strength(lb) | 31.7 | 29.6 | 30.2 | 30.6 | 30.5 |
| Tenacity (g/den) | 9.5 | 8.7 | 9.0 | 9.1 | 9.1 |
| Elongation(%) | 10.1 | 9.7 | 9.2 | 9.6 | 9.8 |
| Modulus @ 1% Elong.(lb) | 125 | 117 | 128 | 130 | 126 |
| | | | | | |
| **Greige Cord Properties** | | | | | |
| Denier | 3428 | 3217 | 3272 | 3129 | 3295 |
| Tensile Strength(lb) | 55.4 | 52.9 | 53.0 | 49.5 | 51.4 |
| Tenacity (g/den) | 7.34 | 7.47 | 7.35 | 7.19 | 7.19 |
| Elongation (%) | 13.0 | 12.8 | 12.3 | 12.1 | 12.1 |
| | | | | | |
| **Strength Retention (%)** | | | | | |
| RFL dipped | 88 | 91 | 92 | 100 | 98 |
| Heat Aged | 85 | 90 | 92 | 92 | 91 |
| Peel Adhesion Strength lb/in. | | | | | |
| at 120°C. | 25 | 73 | 54 | 70 | 68 |

## TABLE 7

PROPERTIES OF CORDS FROM FINISH ROLL APPLICATION
WITH EMULSION OF EPOXY/OIL RATIO OF 45/55

| | Total FOY (%) | | | |
|---|---|---|---|---|
| | 1.2 | 1.9 | 2.2 | 2.8 |
| **Greige Cord Properties** | | | | |
| Denier | 3447 | 3404 | 3445 | 3452 |
| Tensile Strength (lb) | 54.9 | 53.2 | 51.7 | 51.9 |
| Tenacity (g/den) | 7.23 | 7.10 | 6.81 | 6.83 |
| Elongation (%) | 12.5 | 13.1 | 13.2 | 13.4 |
| | | | | |
| **Strength Retention %** | | | | |
| RFL Dipped | 89 | 91 | 92 | 92 |
| Heat Aged | 85 | 88 | 86 | 88 |
| | | | | |
| **Peel Adhesion Strength (lb/in)** | | | | |
| at 25°C. | 99 | 117 | 118 | 115 |
| at 120°C. | 60 | 77 | 79 | 87 |

TABLE 8

PROPERTIES OF YARN AND CORD FROM FINISH ROLL
APPLICATION WITH EPOXY/OIL RATIO OF 50/50
EMULSION AT VARYING FOY

| | Total FOY (%) | | | |
|---|---|---|---|---|
| | 1.2 | 1.7 | 1.9 | 2.5 |
| Yarn Properties | | | | |
| Denier | 1535 | 1534 | 1561 | 1542 |
| Tensile Strength, lb | 30.8 | 29.6 | 29.4 | 30.1 |
| Tenacity (g/den) | 9.1 | 8.8 | 8.5 | 8.9 |
| Elongation, % | 9.8 | 8.5 | 8.7 | 9.6 |
| Modulus @ 1% Elong. | - | 118 | 118 | 117 |
| | | | | |
| Greige Cord Properties | | | | |
| Denier | 3345 | 3438 | 3349 | 3433 |
| Tensile Strength (lb) | 52.2 | 51.7 | 50.4 | 51.3 |
| Tenacity, (g/den) | 7.08 | 6.83 | 6.83 | 6.78 |
| Elongation, (%) | 11.3 | 13.8 | 13.9 | 13.7 |
| | | | | |
| Strength Retention (%) | | | | |
| RFL Dipped | 94 | 85 | 91 | 92 |
| Heat Aged | 90 | 87 | 87 | 85 |
| | | | | |
| Peel Adhesion Strength, (lb/in.) | | | | |
| at 25°C. | 112 | 106 | 115 | 113 |

## TABLE 9

### PROPERTIES OF YARN AND CORD FROM FINISH ROLL APPLICATION WITH CONSTANT EPOXY/OIL RATIO OF 55/45 BUT VARYING FOY

|  | Total FOY (%) | | | |
|  | 1.3 | 1.5 | 2.0 | 2.4 |
|---|---|---|---|---|
| **Yarn Properties** | | | | |
| Denier | 1560 | 1513 | 1544 | 1584 |
| Tensile Strength (1b) | 29.7 | 29.6 | 30.5 | 29.5 |
| Tenacity, (g/den.) | 8.6 | 8.8 | 9.0 | 8.7 |
| Elongation, (%) | 8.8 | 10.4 | 9.1 | 9.3 |
| Modulus @ 1% Elong. | 120 | - | 124 | 123 |
| | | | | |
| **Greige Cord Properties** | | | | |
| Denier | 3417 | 3356 | 3400 | 3386 |
| Tensile Strength (b) | 54.3 | 50.5 | 51.9 | 51.3 |
| Tenacity, (g/den.) | 7.22 | 6.84 | 6.93 | 6.8ð |
| Elongation, (%) | 13.5 | 13.6 | 13.6 | 14.5 |
| | | | | |
| **Strength Retention (%)** | | | | |
| RFL Dipped | 91 | 90 | 89 | 90 |
| Heat Aged | 85 | 84 | 86 | 87 |
| | | | | |
| **Peel Adhesion Strength (lb/in)** | | | | |
| at 25°C. | 102 | 109 | 123 | 115 |
| at 120°C. | 80 | 74 | 87 | 81 |

In these examples, particularly Example III, it was observed that the yarn finish oil had a better compatability with the epoxy than previous oil, such as the oil disclosed in U.S. Patent 4,356,219, and thus yielded a more stable emulsion (see Example III).

This stability enabled the use of a single (mixed) emulsion of oil and epoxy and also provided a more uniform yarn coating for better processability and higher adhesion.

While certain representative embodiments and details have been shown for the purpose of illustrating the invention, it will be apparent to those skilled in this art that various changes and modifications may be made therein without departing from the spirit or scope of the invention.

What Is Claimed Is:

1. A drawn yarn composite which comprises a polyester yarn, optionally in the form of a multiple of twisted or cabled drawn yarns to form a cord thereof, and a coating thereon, comprised of, based on the yarn, (A) about 0.5 to about 1.5 weight percent of a spin-finish fiber treatment oil comprised of a mixture of (1) pentaerythritol tetraester ($C_{12}$-$C_{14}$) fatty acid, (2) polyoxyethylene nonyl phenol, (3) decaglyceroltetraoleate, (4) ethoxylated castor oil and (5) oleyl diethyl imidazolinium sulfate and (B) about 0.1 to about 2.0 weight percent epoxy resin having a melting point below 75°C. and containing about 9 to about 3, preferably about 8 to about 4, weight percent 2-(ß-dimethylaminoethoxy)-4-methyl-1,3,2-dioxaborinane based on said epoxy resin.

2. The yarn composite of Claim 1 where said polyester is polyethylene terephthalate, where said epoxy is a glycidyl ether of a phenol novalac and the weight ratio of epoxy to spin finish oil is in the range of about 1/15 to about 5/1 and the total amount of epoxy and spin finish oil is in the range of about 0.7 to about 2.8 weight percent based on the yarn or cord itself.

3. The yarn composite of Claim 2 where said epoxy is a glycidyl ether of bisphenol-A.

4. A rubber/cord composite comprised of a sulfur cured diene rubber adhered to an RFL treated,

- 21 -

0119948

twisted and cabled, drawn polyester yarn composite of Claim 1 in the form of a cord.

5. A rubber/cord composite of Claim 4 where said polyester is polyethylene terephthalate, the epoxy is a glycidyl ether of a phenol novalac, and the weight ratio of spin finish oil to epoxy is in the range of about 1/15 to about 5/1.

6. A rubber/cord composite of Claim 5 where said diene rubber is selected from at least one of natural rubber, cis 1,4-polyisoprene, cis 1,4-polybutadiene, butadiene/styrene copolymers and butadiene/acrylonitrile copolymer. where said RFL is a resorcinol/formaldehyde resin and butadiene/styrene/-vinyl pyridine latex product and said epoxy is a glycidyl ether of bisphenol-A.

7. A method of preparing the drawn polyester yarn of Claim 1 which comprises (A) applying said aqueous emulsion(s) of epoxy and spin finish oil as (i) the same emulsion or (ii) separate emulsions in either order or simultaneously so that the emulsions at least partially intermix on the surface of the yarn and either (B-1) drying the yarn if it has been previously drawn or (B-2) drawing the yarn if the emulsion(s) were applied to a spun (or undrawn) yarn.

8. The method of Claim 10 where said polyester yarn is polyethylene terephthalate, where said epoxy is a glycidyl ether of a phenol novalac and the weight ratio of spin finish oil to epoxy is in the range of about 1/15 to about 5/1.

9. The method of Claim 8 where said drawn yarn is twisted and cabled to form a cord and further treated by an aqueous RFL dip.

10. The method of Claim 9 where said RFL is a resorcinol/formaldehyde resin and butadiene/styrene/-vinyl-pyridine terpolymer latex and where said epoxy is a glycidyl ether of bisphenol-A.

VI5A